# EUROPÄISCHE PATENTANMELDUNG

(11) **EP 2 368 777 A1**
(43) Veröffentlichungstag der Anmeldung: **28.09.2011**
(21) Anmeldenummer: 11156422.5
(22) Anmeldetag: 01.03.2011
(51) Int. Cl.: B60T 8/17, B60T 8/172

(54) **Verfahren und Vorrichtung zur Schräglagenbestimmung von Einspurfahrzeugen**

(30) Priorität: 08.03.2010 DE 102010015859
(71) Anmelder: POLO EXPRESSVERSAND Gesellschaft für Motorradbekleidung und Sportswear mbH, 41363 Jüchen (DE)
(72) Erfinder: Landowski, Sascha, 12277 Berlin (DE)
(74) Vertreter: Kluin, Jörg-Eden

(57) **Zusammenfassung**

Verfahren zur Bestimmung des Winkels (ϕ) der Schräglage eines Einspurfahrzeugs (4) mit mindestens einem Beschleunigungssensor (1), mit mindestens einer Messachse (x, y), wobei aus den Messwerten dieser mindestens einen Messachse (x, y) der Winkel (ϕ) der Schräglage des Einspurfahrzeugs (4) berechnet wird.

## Beschreibung

Die Erfindung betrifft ein Verfahren und eine Vorrichtung zur Schräglagenbestimmung von Einspurfahrzeugen. Derartige Verfahren und Vorrichtungen sind für vielerlei Zwecke nutzbar. Beispielsweise kann dem Fahrer angezeigt werden, wenn sich seine Neigung der entsprechend der Haftgrenze des Reifens maximal möglichen Neigung des Motorrads nähert. Auch für Scheinwerfernachführungen oder die Steuerung von Bremsanlagen ist die Bestimmung der Schräglage vorteilhaft. Derartige Verfahren und Vorrichtungen sind bereits bekannt. Beispielsweise zeigt die DE 10 2004 060 292 A1 ein derartiges Verfahren und eine derartige Vorrichtung. Nachteilig hierbei ist, dass derartige Verfahren und Vorrichtungen relativ aufwendig oder ungenau sind.

Die Erfindung hat es sich zur Aufgabe gemacht, ein derartiges Verfahren und eine derartige Vorrichtung ohne den genannten Nachteil zu schaffen.

Diese Aufgabe wird in ihrem verfahrensseitigen Aspekt durch das in Anspruch 1 wiedergegebene Verfahren gelöst. Die Aufgabe wird auch durch die in Anspruch 11 wiedergegebene Vorrichtung gelöst.

Das erfindungsgemäße Verfahren zur Bestimmung des Winkels der Schräglage eines Einspurfahrzeugs bedient sich mindestens eines Beschleunigungssensors mit mindestens einer Messachse. Aus den Messwerten dieser mindestens einen Messachse wird der Winkel der Schräglage des Einspurfahrzeugs berechnet. Vorzugsweise wird der Winkel der während der Fahrt auftretenden Schräglage berechnet. Bei einem Einspurfahrzeug treten während der Fahrt viele unterschiedliche Kräfte auf, die sich überlagern. Ein fahrendes Einspurfahrzeug bewegt sich in einem sehr komplexen Kraftfeld, welches aus der resultierenden Kraft aus Fahrbeziehungsweise Kurvenfahrt- Beschleunigungskraft und Gewichtskraft (sowie Gierkraft) besteht. Beschleunigungssensoren haben jedoch den Vorteil, dass sie in sehr kleiner und sehr genauer Ausführung zu einem akzeptablen Preis auf dem Markt verfügbar sind. Beschleunigungen, die senkrecht auf eine Messachse eines Beschleunigungssensors wirken, beeinflussen das Messergebnis dieser Messachse zumindest nahezu nicht. Ein Einspurfahrzeug bei gleichmäßiger Kurvenfahrt liegt (zumindest in etwa) so weit in der Kurve, dass die Richtung seiner Hochachse mit der Richtung der resultierenden Beschleunigung aus der waagerecht wirkenden, in Richtung der kurvenäußeren zeigenden Zentrifugalbeschleunigung und der senkrecht nach unten wirkenden Erdbeschleunigung übereinstimmt. Mit zunehmender Kurvenneigung wächst die Größe der Zentrifugalbeschleunigung und damit die Größe der resultierenden Beschleunigung.

In der bevorzugten Ausführungsform ist mindestens eine Messachse nicht parallel zur Hochachse des Einspurfahrzeugs ausgerichtet, sondern nimmt zu dieser Hochachse einen bekannten Winkel ein.

Vorzugsweise wird aus den Messwerten dieser mindestens einen Messachse unter Berücksichtung des bekannten Winkels, den diese zur Hochachse des Einspurfahrzeugs einnimmt, die Größe der resultierenden Beschleunigung aus Erdbeschleunigung und Zentrifugalbeschleunigung bestimmt. Bevorzugt wird aus der auf diese Weise bestimmten resultierenden Beschleunigung aus Erdbeschleunigung und Zentrifugalbeschleunigung und dem Wert der Erdbeschleunigung der Winkel der Schräglage des Einspurfahrzeugs berechnet.

Vorzugsweise wird der Winkel der Schräglage des Einspurfahrzeugs aus dem Arkuskosinus aus der Größe der Erdbeschleunigung geteilt durch die Größe der resultierenden Beschleunigung aus Erdbeschleunigung und Zentrifugalbeschleunigung berechnet.

Vorzugsweise ist die mindestens eine Messachse senkrecht zur Längsachse des Einspurfahrzeugs orientiert. Hierdurch beeinflussen Beschleunigungen, die in Längsachse des Fahrzeugs wirken (etwa durch Bremsen oder Steigerung der Fahrgeschwindigkeit) das Messergebnis dieser mindestens einen Messachse zumindest nahezu nicht.

In der bevorzugten Ausführungsform sind mindestens zwei Messachsen, vorzugsweise genau zwei Messachsen senkrecht zur Längserstreckung des Einspurfahrzeugs vorgesehen, die weiter bevorzugt nicht parallel zueinander angeordnet sind und besonders bevorzugt jeweils in einem Winkel von 45° zur Hochachse des Einspurfahrzeugs angeordnet sind. Die Messachsen stehen also senkrecht aufeinander. Hierdurch ist eine Voraussetzung dafür geschaffen, die Größe der resultierenden Beschleunigung auf eine besonders genaue Art, also mit einem lediglich geringen Fehler, zu bestimmen.

Vorzugsweise wird die Größe der resultierenden Beschleunigung aus Erdbeschleunigung und Zentrifugalbeschleunigung aus der Quadratwurzel aus der Summe der Quadrate der Messwerte der beiden Messachsen berechnet. Aus der symmetrischen Anordnung der beiden Messachsen in Bezug zur Hochachse und damit in Bezug zur resultierenden Beschleunigung aus Zentrifugalbeschleunigung und Erdbeschleunigung folgt, dass die Größe der Messwerte beider Messachsen zumindest ähnlich ist. Indem also die Messwerte zweier Messachsen gleichberechtigt einbezogen werden, steigt die Genauigkeit des Ergebnisses. Denn möglicherweise vorhandene Fehler des Ergebnisses einer Messachse können durch das Einbeziehen des Wertes der zweiten Messachse abgemildert werden.

Eine weitere Reduktion von störenden Einflüssen ergibt sich, wenn die Messwerte der Messachsen, wie bevorzugt, gefiltert werden. Vorzugsweise geschieht dies im Wege der gleitenden Mittelwertbildung. Bevorzugt ergibt sich hierbei eine Zeitkonstante von etwa einer bis eineinhalb Sekunden.

Es ist denkbar, die Messergebnisse der mindestens einen Messachse exponentiell zu glätten.

Es ist denkbar, den Wert der Erdbeschleunigung für die Bestimmung des Winkels der Schräglage des Einspurfahrzeugs voreinzustellen und stets den gleichen Wert zu verwenden. Zudem ist denkbar, den Wert der Erdbeschleunigung aus den Messwerten der bereits genannten Messachsen und einer weiteren Messachse, die senkrecht zu den bereits genannten Messachsen steht, unmittelbar nach Betätigen der Zündung des Einspurfahrzeugs zu berechnen. In der bevorzugten Ausführungsform wird der Wert der Erdbeschleunigung aus den Messwerten der bereits genannten Messachsen und einer weiteren Messachse, die senkrecht zu den bereits genannten Messachsen steht, wiederholt berechnet. Vorzugsweise wird die Erdbeschleunigung bei jeder Ruhelage des Einspurfahrzeugs neu ermittelt und gespeichert. Die Ruhelage wird bevorzugt dadurch erkannt, dass die aus allen drei Messachsen resultierende Gesamtbeschleunigung einen bestimmten Schwellwert unterschreitet. Der Schwellwert berücksichtigt bevorzugt die Toleranzen des Beschleunigungssensors und die unterschiedlichen g-Werte an den unterschiedlichsten Orten auf der Erde. In einer Ausführungsform beträgt der Schwellwert ca. 1120 milli-g, also dass 1,12 - fache der durchschnittlichen Erdbeschleunigung.

Bevorzugt wird mindestens ein Beschleunigungssensor verwendet, in den mehrere Messachsen integriert sind. Vorzugsweise wird genau ein Beschleunigungssensor verwendet, in den bevorzugt genau drei, weiter bevorzugt senkrecht aufeinander stehende Messachsen integriert sind. Hierdurch wird es möglich, das beschriebene Verfahren, insbesondere die Bestimmung der resultierenden Beschleunigung aus Erdbeschleunigung und Zentrifugalbeschleunigung unter Einbeziehung der Werte zweier Messachsen mit lediglich einem einzigen Beschleunigungssensor durchzuführen. Das Verfahren zeichnet sich daher bei hoher Genauigkeit und Zuverlässigkeit dadurch aus, dass es einfach ist.

In der bevorzugten Ausführungsform wird ein Mikrocontroller verwendet, der bevorzugt über eine hohe Speicherkapazität und vorzugsweise eine hohe Rechenleistung verfügt.

Der Beschleunigungssensor weist bevorzugt eine integrierte Messsignalauswertung auf. Vorzugsweise kompensiert er Nachteile wie starke Temperaturschwankungen und Fehler durch starkes Signalrauschen. Der Beschleunigungssensor hat besonders bevorzugt eine Genauigkeit von mindestens 1, 5 % und misst vorzugsweise sowohl die statischen, als auch die dynamischen Kräfte. Bevorzugt stellt er die Messwerte mikrocontrollergerecht zur Verfügung. Der Beschleunigungssensor verfügt bevorzugt über eine hohe Kanalselektivität. Beschleunigungen, die senkrecht auf eine Messachse wirken, haben also keine oder nur kleine Auswirkungen auf das Messergebnis dieser Messachse. Vorzugsweise ist die vollständige Signalaufbereitung samt Temperaturkompensation und Filterung auf einem einzigen Chip des Beschleunigungssensors angeordnet. Die Messwerte werden bevorzugt derart digital zur Verfügung gestellt, dass sie direkt durch einen Mikrocontroller verarbeitet werden können.

In einer Ausführungsform wird auch der Winkel der Schräglage des ruhenden Einspurfahrzeugs ermittelt. Im Stand und bei seitlicher Neigung des Einspurfahrzeugs bleibt die ermittelte Erdbeschleunigung und der Wert, der sich aus der Quadratwurzel der Summe der Quadrate der Messwerte der beiden Messachsen ergibt, zumindest nahezu konstant. Allerdings ändert sich das Verhältnis zwischen dem Messwert einer Messachse zu dem Wert, der sich aus der Quadratwurzel der Summe der Quadrate der Messwerte der beiden Messachsen ergibt. Der Winkel der Schräglage des ruhenden Einspurfahrzeugs wird bevorzugt unter Zuhilfenahme des Arkuskosinus des Messwerts einer senkrecht zur Längsachse des Einspurfahrzeugs ausgerichteten Messachsen, geteilt durch die Quadratwurzel der Summe der Quadrate der Messwerte beider senkrecht zur Längsachse des Einspurfahrzeugs ausgerichteter Messachsen bestimmt.

In seinem vorrichtungsseitigen Aspekt umfasst die Erfindung ein Einspurfahrzeug mit einer Vorrichtung zur Durchführung des erfindungsgemäßen Verfahrens mit mindestens einem Beschleunigungssensor, mit mindestens einer Messachse. Es ist ein Mikrocontroller vorgesehen. Dieser berechnet aus den Messwerten der mindestens einen Messachse den Winkel der Schräglage des Einspurfahrzeugs.

Die mindestens eine Messachse ist bevorzugt nicht parallel zur Hochachse des Einspurfahrzeugs ausgerichtet ist, sondern nimmt zu dieser einen bekannten Winkel ein. Der Mikrokontroller berechnet bevorzugt unter Berücksichtigung des bekannten Winkels, den die mindestens eine Messachse zur Hochachse des Einspurfahrzeugs einnimmt, vorzugsweise die Größe der resultierenden Beschleunigung aus Erdbeschleunigung und Zentrifugalbeschleunigung. Der Mikrocontroller berechnet weiter bevorzugt aus diesem Wert und dem Wert der Erdbeschleunigung den Winkel der Schräglage des Einspurfahrzeugs.

Vorzugsweise ist die mindestens eine Messachse senkrecht zur Längsachse des Einspurfahrzeugs angeordnet.

Weiter bevorzugt sind zwei Messachsen vorgesehen, die vorzugsweise nicht parallel zueinander angeordnet sind und besonders bevorzugt jeweils einen Winkel von etwa 45° zur Hochachse des Einspurfahrzeugs einnehmen. Die beiden Messachsen stehen also bevorzugt senkrecht aufeinander.

Vorzugsweise berechnet der Mikrocontroller die Größe der resultierenden Beschleunigung aus Erdbeschleunigung und Zentrifugalbeschleunigung aus der Quadratwurzel aus der Summe der Quadrate der Messwerte der beiden senkrecht zur Längsachse des Einspurfahrzeugs und senkrecht zueinander ausgerichteten Messachsen. Hierdurch werden die Messwerte zweier Messachsen gleichberechtigt einbezogen, was der Genauigkeit des Ergebnisses zugute kommt.

In der bevorzugten Ausführungsform ist ein einziger Beschleunigungssensor vorgesehen, der bevorzugt drei vorzugsweise zueinander senkrecht stehende Messachsen aufweist. In einer Ausführungsform handelt es sich bei dem Beschleunigungssensor um ein Standardbauteil. Die Kosten der erfindungsgemäßen Vorrichtung werden hierdurch, verglichen mit einer Vorrichtung mit mehreren Beschleunigungssensoren, gesenkt. Dennoch können bei der Ermittlung der resultierenden Beschleunigung aus Erdbeschleunigung und Zentrifugalbeschleunigung die Messwerte zweier Messachsen berücksichtigt werden, was der Genauigkeit zugute kommt.

Der Beschleunigungssensor umfasst bevorzugt eine integrierte Messsignalauswertung, die die Messwerte mikrocontrollergerecht zur Verfügung stellt. Vorzugsweise kompensiert der Beschleunigungssensor Temperaturschwankungen und Fehler durch starkes Signalrauschen. Die Genauigkeit des Beschleunigungssensors beträgt bevorzugt mindestens 1,5%.

Vorzugsweise ist eine Anzeige vorgesehen, die dem Nutzer den Winkel der Schräglage anzeigt.

Die Erfindung betrifft auch eine Vorrichtung des erfindungsgemäßen Einspurfahrzeugs mit den oben beschriebenen Merkmalen.

Die Erfindung soll nun anhand eines in den Zeichnungen gezeigten Ausführungsbeispiels näher erläutert werden. Es zeigen:
- Fig. 1: eine schematische Darstellung der Anordnung der Messachsen des Beschleunigungssensors des erfindungsgemäßen Verfahrens und der erfindungsgemäßen Vorrichtung, an einem nicht geneigten Einspurfahrzeug, wobei die Längsachse des Einspurfahrzeugs senkrecht zur Bildebene ausgerichtet ist;
- Fig. 2: eine schematische Darstellung von auf ein Einspurfahrzeug in Kurvenfahrt wirkenden Beschleunigungen;
- Fig. 3: eine schematische Darstellung von auf ein Einspurfahrzeug in Kurvenfahrt in Richtung der Messachsen wirkenden Beschleunigungen.

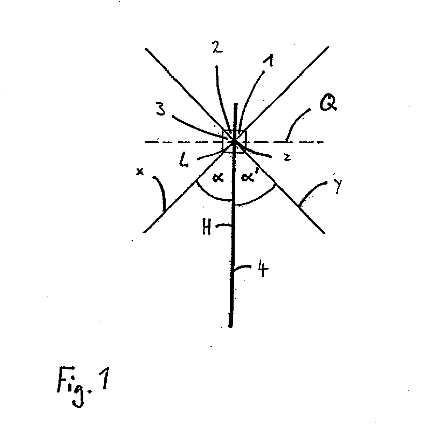

Fig. 1 zeigt schematisch ein Ausführungsbeispiel eines Einspurfahrzeugs 4 mit einer Vorrichtung 2 zur Bestimmung des Winkels ϕ der Schräglage des Einspurfahrzeugs 4 mit einem Beschleunigungssensor 1, der drei zueinander senkrecht stehende Messachsen x, y, z aufweist. Der Beschleunigungssensor 1 ist in etwa in dem Schwerpunkt von Einspurfahrzeug 4 und in den Zeichnungen nicht dargestelltem Fahrer angeordnet. Eine Messachse z des Beschleunigungssensors 1 weist in Richtung der senkrecht zur Bildebene ausgerichteten Längsachse L des Einspurfahrzeugs 4. Die beiden anderen Messachsen x, y sind senkrecht zur Längsachse L des Einspurfahrzeugs 4 ausgerichtet. Die Messachsen x, y sind nicht parallel zueinander. Sie sind auch nicht parallel zur Hochachse H des Einspurfahrzeugs 4, sondern schließen mit dieser einen Winkel α, beziehungsweise α' ein. Der Winkel α und α' beträgt jeweils 45°. Es ist keine Messachse vorgesehen, die parallel zur Querachse Q des Einspurfahrzeugs 4 ausgerichtet ist.

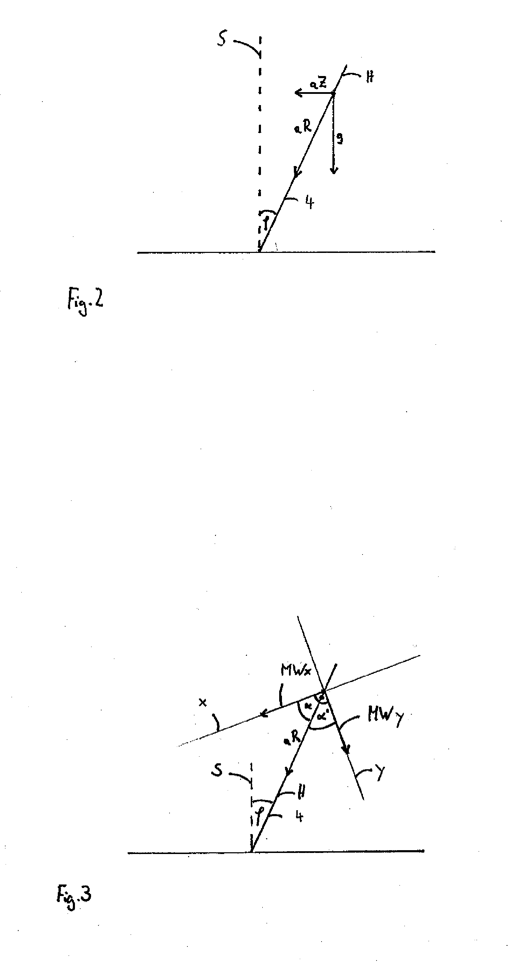

Das in Fig. 2 schematisch dargestellte Einspurfahrzeug 4 ist um den Winkel ϕ von der Vertikalen S nach rechts in die Kurve geneigt. Durch die Kurvenfahrt wird eine Zentrifugalbeschleunigung aZ hervorgerufen, welche vom gemeinsamen Schwerpunkt des Einspurfahrzeugs 4 und Fahrers waagerecht in Richtung Kurvenäußeres gerichtet ist. Diese Zentrifugalbeschleunigung resultiert mit der vom gleichen Punkt lotrecht nach unten weisenden Erdbeschleunigung g zur resultierenden Beschleunigung aR. Die resultierende Beschleunigung aR aus Zentrifugalbeschleunigung aZ und Erdbeschleunigung g verläuft (zumindest nahezu) deckungsgleich zur Hochachse H des Einspurfahrzeugs 4. Zwischen der Größe der resultierenden Beschleunigung aR und dem Neigungswinkel ϕ des Einspurfahrzeugs 4 zur Vertikalen S besteht ein eindeutiger Zusammenhang. Der Kosinus des Winkels ϕ ist gleich dem Quotient aus Erdbeschleunigung g und resultierender Beschleunigung aR aus Zentrifugalbeschleunigung aZ und Erdbeschleunigung g. Der Winkel ϕ der Schräglage des Einspurfahrzeugs 4 wird daher aus dem Arkuskosinus der Größe der Erdbeschleunigung g geteilt durch die Größe der resultierenden Beschleunigung aR aus Zentrifugalbeschleunigung aZ und Erdbeschleunigung g berechnet.

Fig. 3 verdeutlicht die Ermittlung der Größe der resultierenden Beschleunigung aR aus Zentrifugalbeschleunigung aZ und Erdbeschleunigung g. Da die senkrecht zur Längsachse L ausgerichteten Messachsen x, y senkrecht aufeinander stehen, ist mit dem Satz von Pythagoras die Summe aus dem Quadrat des Messwerts MWx der Messachse x und des Quadrats des Messwerts MWy der Messachse y gleich dem Quadrat der resultierenden Beschleunigung aR aus Zentrifugalbeschleunigung aZ und Erdbeschleunigung g. Die Größe dieser resultierenden Beschleunigung aR entspricht daher der Quadratwurzel aus der Summe der Quadrate der beiden Messwerte MWx, MWy. Die derartige Bestimmung der Größe dieser resultierenden Beschleunigung aR ist in hohem Maße unempfindlich gegenüber störenden Einflüssen.

Das Messverfahren verläuft wie folgt: Die Messwerte aller drei Messachsen x, y, z, werden noch auf dem Chip des Beschleunigungssensors 1 aufbereitet und anschließend zu dem Mikrocontroller 3 übertragen. In einem ersten Schritt erfolgt dort die Filterung der drei Messwerte. Damit werden die letzten Störanteile aus den Messsignalen entfernt. Dies erfolgt durch eine einfache Gleitende Mittelwertbildung mit einer Zeitkonstante von etwa einer Sekunde. Das Array für die Messwerte der Gleitenden Mittelwertbildung ist also so groß, dass die Messwerte von etwa einer Sekunde aufgenommen werden können.

Anschließend wird die Größe der Beschleunigungen berechnet:
Wenn sich das Einspurfahrzeug 4 in Ruhelage befindet, wird die Größe der resultierenden Gesamtbeschleunigung in Ruhelage des Einspurfahrzeugs 4, also die Erdbeschleunigung g berechnet, indem die Quadratwurzel aus der Summe der Quadrate der Messwerte aller drei Messachsen x, y, z berechnet wird. Wenn dieser Wert einen Schwellenwert unterschreitet, im gezeigten Ausführungsbeispiel 950 milli-g, dann wird der Wert als fehlerhaft erkannt, gelöscht und die Messung wiederholt. Bei einem Unterschreiten eines über diesem Schwellenwert liegenden weiteren Schwellenwertes, im gezeigten Ausführungsbeispiel 1120 milli-g, wird erkannt, dass sich das Einspurfahrzeug 4 in Ruhelage befindet und der Wert als Erdbeschleunigung g gespeichert. Dieser Vorgang wiederholt sich, sobald der weitere Schwellenwert erneut unterschritten wird. Der Wert der Erdbeschleunigung g wird also bei jeder Ruhelage des Einspurfahrzeugs 4 neu ermittelt und gespeichert.
Wenn erkannt wird, dass sich das Einspurfahrzeug 4 in Ruhelage befindet, wird der statische Neigungswinkel des Einspurfahrzeugs unter Zuhilfenahme des Arkuskosinus eines der Messwerte MWx oder MWy einer senkrecht zur Längsachse angeordneten Messachse x oder y, geteilt durch die Quadratwurzel aus der Summe der Quadrate der Messwerte MWx, MWy der beiden senkrecht zur Längsachse L angeordneten Messachsen x, y berechnet und dem Fahrer auf einer Anzeige angezeigt.
Wenn erkannt wird, dass sich das Einspurfahrzeug nicht in Ruhelage befindet, wird die Größe der resultierenden Beschleunigung aR aus Zentrifugalbeschleunigung aZ und Erdbeschleunigung g berechnet, indem die Quadratwurzel aus der Summe der Quadrate der Messwerte MWx, MWy der beiden senkrecht zur Längsachse L des Einspurfahrzeugs angeordneten Messachsen x, y berechnet wird. Anschließend wird der Winkel ϕ der Schräglage des fahrenden Einspurfahrzeugs 4 berechnet, indem der Arkuskosinus aus der ermittelten Größe der Erdbeschleunigung geteilt durch die ermittelte Größe der resultierenden Beschleunigung aus Erdbeschleunigung und Zentrifugalbeschleunigung berechnet wird. Auch dieser Wert wird dem Fahrer auf einer Anzeige angezeigt.

### Bezugszeichenliste:

- 1: Beschleunigungssensor
- 2: Vorrichtung
- 3: Mikrocontroller
- 4: Einspurfahrzeug

- H: Hochachse
- Q: Querachse
- L: Längsachse
- S: Vertikale

- x: Messachse
- y: Messachse
- z: Messachse
- MWx: Messwert der Messachse x
- MWy: Messwert der Messachse y

- α, α': Messachsenwinkel
- ϕ: Winkel der Schräglage des Einspurfahrzeugs

- g: Erdbeschleunigung
- aZ: Zentrifugalbeschleunigung
- aR: resultierende Beschleunigung aus Zentrifugalbeschleunigung und Erdbeschleunigung

## Patentansprüche

1. Verfahren zur Bestimmung des Winkels (ϕ) der Schräglage eines Einspurfahrzeugs (4) mit mindestens einem Beschleunigungssensor (1), mit mindestens einer Messachse (x, y), wobei aus den Messwerten (MWx, MWy) dieser mindestens einen Messachse (x, y) der Winkel (ϕ) der Schräglage des Einspurfahrzeugs (4) berechnet wird.

2. Verfahren nach Anspruch 1, **dadurch gekennzeichnet, dass** die mindestens eine Messachse (x, y), nicht parallel zur Hochachse (H) des Einspurfahrzeugs (4) ausgerichtet ist, sondern zu dieser einen bekannten Winkel (α, α') einnimmt.

3. Verfahren nach Anspruch 2, **dadurch gekennzeichnet, dass** aus den Messwerten (MWx, MWy) dieser mindestens einen Messachse (x, y) unter Berücksichtigung des bekannten Winkels (α, α') die Größe der resultierenden Beschleunigung (aR) aus Erdbeschleunigung (g) und Zentrifugalbeschleunigung (aZ) bestimmt wird und aus diesem Wert und dem Wert der Erdbeschleunigung (g) der Winkel (ϕ) der Schräglage des Einspurfahrzeugs (4) berechnet wird.

4. Verfahren nach Anspruch 3, **dadurch gekennzeichnet, dass** der Winkel (ϕ) der Schräglage des Einspurfahrzeugs (4) aus dem Arkuskosinus aus der Größer der Erdbeschleunigung (g) geteilt durch die Größe der resultierenden Beschleunigung (aR) aus Erdbeschleunigung (g) und Zentrifugalbeschleunigung (aZ) berechnet wird.

5. Verfahren nach einem der Ansprüche 1 bis 4, **dadurch gekennzeichnet dass** die mindestens eine Messachse (x, y) senkrecht zur Längsachse (L) des Einspurfahrzeugs (4) ausgerichtet ist.

6. Verfahren nach einem der Ansprüche 1 bis 5, **dadurch gekennzeichnet, dass** zwei Messachsen (x, y) vorgesehen sind und die zwei Messachsen (x, y) nicht parallel zueinander und jeweils in einem Winkel (α, α') von 45° zur Hochachse (H) des Einspurfahrzeugs (4) ausgerichtet sind.

7. Verfahren nach Anspruch 6, **dadurch gekennzeichnet, dass** die Größe der resultierenden Beschleunigung (aR) aus Erdbeschleunigung (g) und Zentrifugalbeschleunigung (aZ) aus der Quadratwurzel aus der Summe der Quadrate der Messwerte der beiden Messachsen (x, y) berechnet wird.

8. Verfahren nach einem der Ansprüche 1 bis 7, **dadurch gekennzeichnet, dass** die Messwerte der Messachsen (x, y) im Wege der gleitenden Mittelwertbildung gefiltert werden.

9. Verfahren nach einem der Ansprüche 1 bis 8, **dadurch gekennzeichnet, dass** der Wert der Erdbeschleunigung (g) aus den Messwerten der mindestens einen Messachse (x, y) und einer weiteren Messachse (z), die senkrecht zu der mindestens einen Messachse (x, y) steht, wiederholt berechnet wird.

10. Verfahren nach einem der Ansprüche 1 bis 9, **dadurch gekennzeichnet, dass** ein einziger Beschleunigungssensor (1) verwendet wird, der drei zueinander senkrecht stehende Messachsen (x, y, z) aufweist

11. Einspurfahrzeug (4) mit einer Vorrichtung (2) zur Durchführung des Verfahrens nach einem der Ansprüche 1 bis 10, mit mindestens einem Beschleunigungssensor (1), mit mindestens einer Messachse (x, y), mit einem Mikrocontroller (3), wobei der Mikrocontroller (3) derart vorgesehen ist, dass er aus den Messwerten (MWx, MWy) dieser mindestens einen Messachse (x, y) den Winkel (ϕ) der Schräglage des Einspurfahrzeugs (4) berechnet.

12. Einspurfahrzeug (4) nach Anspruch 11, **dadurch gekennzeichnet, dass** die mindestens einer Messachse (x, y) nicht parallel zur Hochachse (H) des Einspurfahrzeugs ausgerichtet ist, sondern zu dieser einen bekannten Winkel (α, α') einnimmt und der Mikrocontroller (3) unter Berücksichtigung des bekannten Winkels (α, α') die Größe der resultierenden Beschleunigung (aR) aus Erdbeschleunigung (g) und Zentrifugalbeschleunigung (aZ) berechnet und aus diesem Wert und dem Wert der Erdbeschleunigung (g) den Winkel (ϕ) der Schräglage des Einspurfahrzeugs (4) berechnet.

13. Einspurfahrzeug (4) nach Anspruch 11 oder 12, **dadurch gekennzeichnet, dass** die mindestens eine Messachse (x, y) senkrecht zur Längsachse (L) des Einspurfahrzeugs (4) angeordnet ist.

14. Einspurfahrzeug (4) nach einem der Ansprüche Anspruch 11 bis 13, **dadurch .gekennzeichnet, dass** zwei Messachsen (x, y) vorgesehen sind, die nicht parallel zueinander ausgerichtet sind und jeweils einen Winkel (α, α') von 45° zur Hochachse (H) des Einspurfahrzeugs (4) einnehmen und der Mikrocontroller (3) die Größe der resultierenden Beschleunigung (aR) aus Erdbeschleunigung (g) und Zentrifugalbeschleunigung (aZ) aus der Quadratwurzel aus der Summe der Quadrate der Messwerte (MWx, MWy) der beiden senkrecht zur Längsachse des Einspurfahrzeugs (4) ausgerichteten Messachsen (x, y) berechnet.

15. Vorrichtung (2) mit den Merkmalen nach einem der Ansprüche 11 bis 14.
